# EUROPÄISCHE PATENTSCHRIFT

(11) **EP 1 502 530 B1**
(45) Veröffentlichungstag und Bekanntmachung des Hinweises auf die Patenterteilung: **25.06.2008**
(21) Anmeldenummer: 04017358.5
(22) Anmeldetag: 22.07.2004
(51) Int. Cl.: A47J 31/40

(54) **Ventilmechanismus für eine Brühvorrichtung**
Valve mechanism for a brewing device
Mécanisme de vanne pour un dispositif d'infusion

(30) Priorität: 29.07.2003 DE 10334544; 22.01.2004 DE 102004003359
(43) Veröffentlichungstag der Anmeldung: 02.02.2005
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(56) Entgegenhaltungen:
- GB-A- 939 813
- GB-A- 2 374 796

## Beschreibung

Die vorliegende Erfindung betrifft eine Brühvorrichtung zur Zubereitung von Kaffee, insbesondere für eine Niederdruckkaffeemaschine, mit einer Brühkammer, und mit einer Zuführeinheit für Brühwasser, die einen Zulauf für das Brühwasser und ein Einlassventil in die Brühkammer aufweist.

Eine solche Brühvorrichtung ist in der GB 939,183 gezeigt, die eine Kaffeemaschine zur Zubereitung von Kaffee, Tee oder anderen Heißgetränken beschreibt. Hierbei wird die Brühkammer durch einen unbewegbar mit der Vorrichtung verbundenen Halter zur Aufnahme eines Filterbeutels und einer diesen Halter verschließenden Abdeckung gebildet. Die Abdeckung ist über einen Hebelarm an einem Drehpunkt mit der Vorrichtung verbunden, wobei die Abdeckung zum Schließen der Brühkammer um diesen Drehpunkt geschwenkt wird. Für den Zulauf des Brühwassers in die Brühkammer weist die Abdeckung ein kegelförmiges Einlassventil auf, das mit einer Zulaufleitung verbunden ist. Das Brühwasser strömt vom Einlassventil direkt in die Brühkammer und trifft mittig auf den Filterbeutel.

Die GB 2 374 796 A beschreibt eine gattungsgemäße Vorrichtung zum Zubereiten heißer Getränke, bei der ein Boiler über ein Dreiwegeventil aus einem Wasserreservoir versorgt wird. Die Brüheinheit ist dabei durch eine Zuführleitung mit dem Boiler verbunden. In der Zuführleitung ist ein Druckaufbauventil angeordnet, dass über den Bypass und das Dreiwegeventil die Zuführleitung mit dem Wasserreservoir verbindet. Zum Befüllen des Boilers ist das Druckaufbauventil geöffnet, so dass im gesamten System der gleiche Druck herrscht und das Wasser aus dem Reservoir über das Dreiwegeventil und ein Schließventil in dem Boiler strömt. Zum Erhitzen des Wassers muss das Druckaufbauventil manuell oder automatisch geschlossen werden, wodurch der Bypass abgesperrt wird. Der sich beim Erwärmen des Wassers aufbauende Druck schließt zunächst das Schließventil, bevor nach dem Erreichen eines voreingestellten Drucks das Ventil im oberen Teil der Zuführleitung öffnet und das komplette Boilervolumen an den Brühkopf abgegeben wird.

Der vorliegenden Erfindung liegt die Aufgabe zugrunde, eine Brühvorrichtung zur Zubereitung von Kaffee der eingangs genannten Art bereitzustellen, die den Zulauf des Brühwassers in die Brühkammer verbessert.

Diese Aufgabe wird erfindungsgemäß dadurch gelöst, dass die Zuführeinheit in dem die Brühkammer umgebenden Gehäuse angeordnet ist und einen absperrbaren Rücklauf umfasst.

In den bisher, insbesondere für Niederdruckkaffeemaschinen eingesetzten Brühvorrichtungen wird dem Zulauf des Brühwassers in die Brühkammer nur eine geringe Beachtung geschenkt. Dabei erfordern, neben dem Einlauf des Brühwassers in die Brühkammer, auch die unterschiedlichen Betriebszustände sowie das Nutzerverhalten auch eine entsprechende Berücksichtigung bei der Konstruktion des Brühwasserzulaufs. Der erfindungsgemäße absperrbare Rücklauf der Zuführeinheit ermöglicht einen Ablauf von Luft, Kondensat und abgekühltem Brühwasser sowie einen Erwärmungsüberlauf, d.h. dem bei der Erwärmung von Wasser aus einer Boilervorrichtung durch die Volumenzunahme herausgedrückten Wasseranteil, aus der Zuführeinheit und den Anschlussleitungen zur Zuführeinheit. Dadurch wird sichergestellt, dass auch zu Beginn der Nutzung der Brühvorrichtung kein abgekühltes Wasser über das Einlassventil in die Brühkammer gelangt. Sowohl beim ersten Brühvorgang nach dem Anschalten der Kaffeemaschine als auch zu Beginn jedes weiteren Brühvorgangs wird die Brühkammer ausschließlich mit heißem Brühwasser beaufschlagt. Des Weiteren ermöglicht die erfindungsgemäße Ausgestaltung der Brühvorrichtung ein Erwärmen bzw. ein Warmhalten der Zuführeinheit sowie der Anschlussleitungen zur Zuführeinheit, indem ein geringer Volumenstrom des erwärmten Brühwassers durch die Leitungen und die Zuführeinheit geleitet wird und die Zuführeinheit durch den absperrbaren Rücklauf wieder verlässt.

Eine zweckmäßige Ausführungsform sieht vor, dass der Rücklauf zum Absperren und Öffnen ein Rücklaufventil aufweist. Das Rücklaufventil ermöglicht ein gezieltes Absperren und Öffnen des Rücklaufs, um während des Brühvorgangs ein Ablaufen des Brühwassers durch den Rücklauf zu vermeiden.

Um ein sicheres Öffnen und Absperren des Rücklaufs zu ermöglichen, kann das Rücklaufventil einen im Rücklauf angeordneten Ventilkörper und einen mit dem Ventilkörper zusammenwirkenden Ventilsitz umfassen.

Bevorzugt kann das Rücklaufventil durch die Rücklaufströmung auslösbar ausgestaltet sein. Dadurch lässt sich eine einfache Betätigung des Rücklaufventils in Abhängigkeit vom Betriebszustand realisieren. Dabei ist das Rücklaufventil üblicherweise im Erwärmungszustand oder im Stand-by-Betrieb geöffnet und schließt bei einem Anstieg der Strömungsgeschwindigkeit durch das Rücklaufventil, ausgelöst durch die Förderung des Brühwassers durch eine Pumpe bei Beginn des Brühvorgangs.

Eine günstige Ausgestaltung des Rücklaufventils sieht vor, dass das Rücklaufventil als Floatationskörper ausgebildet ist. Der Floatationskörper, dessen Dichte im Gegensatz zu einem Schwimmkörper größer als die Dichte des ihn umgebenden Mediums ist, wird nach Beginn des Brühvorgangs durch das das Rücklaufventil durchströmende Brühwasser mitgerissen und an den zugehörigen Ventilsitz gedrückt. Nachdem der Floatationskörper die Strömung durch das Rücklaufventil abgesperrt hat, baut sich in der Zuführeinheit ein Druck auf, der den Floatationskörper am Ventilsitz hält. Erst nach Ende des Brühvorgangs reduziert sich der Druck in der Zuführeinheit so weit, dass der Floatationskörper in die Öffnungsstellung zurückfällt. In einer bevorzugten Form ist der Floatationskörper als Glaskugel ausgebildet.

Eine weitere Ausbildung sieht vor, dass das Rücklaufventil einen flexiblen Ventilschirm umfasst, dessen umlaufende Dichtlippe mit einem im Wesentlichen zylindermantelförmigen oder kegelmantelförmigen Abschnitt des Ventilsitzes in Wirkbeziehung steht.

Zwar ist aus der WO 02/088580 A1 bereits ein Ventil mit einem flexiblen Ventilschirm für eine Kaffeemaschine bekannt, allerdings drückt dort die umlaufende Dichtlippe des Ventilschirms auf eine ebene Ventilfläche auf, in der allenfalls in Abhängigkeit der dort beschriebenen Ausführungsformen Leckagenuten vorhanden sind. Hierdurch wird sichergestellt, dass ein vollständiges Verschließen des Ventils erst ab einem ganz bestimmten Druck eintritt. Während bei einer Ausführungsform in diesem Stand der Technik der Ventilschirm über eine Feder abgestützt ist, ist er bei einer anderen Ausführungsform mittels eines an ihm angebrachten Schafts und eines kugelförmigen Vorsprungs an einer Scheibe verrastet. Wo dieses Ventil genau in einer Kaffeemaschine eingesetzt wird, ist nicht beschrieben.

Die vorgenannte Ausbildung der vorliegenden Erfindung bedient sich einer gänzlich anderen Anordnung des Ventils. Dieses drückt mit seiner Dichtlippe nicht gegen eine plane Dichtfläche, sondern gegen einen (innen-)zylindermantelförmigen oder (innen-)kegelmantelförmigen (Bohrungs-)Abschnitt des Ventilsitzes. Hierbei wird sich die Aufspreizung oder das Zusammendrücken des Ventilschirms (Durchmesseränderung) in Abhängigkeit der Strömungsrichtung zunutze gemacht. Darüber hinaus lässt sich auch der Durchmesser eines erfindungsgemäßen Ventils kleiner ausgestalten, als dies bei dem oben zitierten Stand der Technik der Fall ist, da im Stand der Technik der Ventilschirm für eine ausreichende Abstützung weit über die Durchlassöffnung hinaus an seiner horizontalen Ventilsitzfläche angewiesen ist. Bei der vorliegenden Erfindung kann der Durchmesser des Ventilschirms sehr eng an den zylindermantelförmigen oder kegelmantelförmigen Abschnitt des Ventilsitzes angepasst werden, je nachdem ob ein Schließ- oder Öffnungsventil benötigt wird.

Gemäß einer Ausführungsform kann ein zentraler Bereich des flexiblen Ventilschirms eingespannt sein. Der Ventilschirm soll sich demnach nicht wie im Stand der Technik durch axiales Verschieben aufspreizen, sondern es soll sich lediglich der Randbereich des Ventilschirms aufdehnen oder zusammendrücken. Insofern brauchen auch keine axialen Verschiebewege für das Ventil in der Brühvorrichtung vorgesehen werden. In diesem Zusammenhang könnte man auch von einem "atmenden" Ventil sprechen.

Vorteilhafterweise können auf dem zentralen Bereich einer Oberseite des Ventilschirms Rippen aufgedrückt sein, zwischen denen Strömungskanäle ausgestaltet sind. Hierbei handelt es sich um eine einfache Konstruktion, die die Flüssigkeitsströmung nicht behindert, aber dennoch eine gute Fixierung des zentralen Bereichs des flexiblen Ventilschirms bietet. Je nach Ausgestaltung der Rippen können diese auch ein Durchdrücken des flexiblen Ventilschirms in die verkehrte Richtung verhindern.

Bevorzugt kann das Rücklaufventil auf der konkaven Seite seines flexiblen Ventilschirms einen zentralen Stößel aufweisen, der in einem hülsenförmigen Vorsprung angeordnet ist, wobei der Ventilschirm zwischen den Rippen und dem oberen Rand des Vorsprungs eingespannt ist. Der Strömungskanal kann dann außen am Vorsprung entlanggeführt werden, während dieser den zentralen Bereich des Ventilschirms einseitig abstützt. Aufgrund der gewählten Vorspannung zwischen hülsenförmigem Vorsprung und den Rippen könnte unter Umständen Einfluss auf das Steifigkeitsverhalten des Ventilschirms genommen werden.

Von Vorteil ist es, wenn das Rücklaufventil zum Steuern des Rücklaufs ausgebildet ist, die konkave Seite des Ventilschirms der Strömungsrichtung entgegenweist und die umlaufende Dichtlippe im drucklosen Zustand derart im Abstand zum Ventilsitz angeordnet ist, dass das Rücklaufventil im Druckzustand bei einem Schließdruck von min. 3-mal bis max. 5-mal >, bevorzugt 4,5-mal > als der Öffnungsdruck des Einlassventils schließt. Bei dem Rücklaufventil strömt demnach die Flüssigkeit gegen die Innenseite des Ventilschirms und spreizt diesen nach außen auf. Ab einem bestimmten Druck sperrt das Rücklaufventil den Abfluss. Im drucklosen Zustand wird jedoch das Abfließen von sich durch Wärme ausdehnender Flüssigkeit, Kondensat etc. gewährleistet. Des Weiteren gibt es durch die Auswahl des Öffnungsdrucks für das Einlassventil und des Schließdrucks für das Rücklaufventil keine Überschneidung im Schließ- bzw. Öffnungsverhalten.

Eine Variante sieht vor, dass der Rücklauf mit einem Vorratsbehälter verbunden ist. Durch die Anbindung des Rücklaufs an einen Vorratsbehälter ist weder ein Anschluss des Rücklaufs an einen Abfluss noch ein Auffanggefäß, das ein regelmäßiges Ausleeren durch den Benutzer erfordert, notwendig.

Ein Vorteil ist es weiter, wenn gemäß einer Ausführung der Rücklauf in geringem Abstand zum Einlassventil vom Zulauf für das Brühwasser abzweigt. Der geringe Abstand zum Einlassventil ermöglicht die Erwärmung der Zuführeinheit, wobei der Abstand so gewählt ist, dass eine noch ausreichende Erwärmung des Einlassbereiches der Zuführeinheit zur Brühkammer stattfindet.

Für einen einfachen Anschluss, insbesondere flexibler Leitungen, an den Rücklauf und Zulauf der Zuführeinheit, kann der Rücklauf und der Zulauf Steckanschlüsse aufweisen, die bevorzugt zum Anschließen flexibler Leitungen ausgebildet sind.

Um eine Behinderung in der Führung der Anschlussleitungen zur Zuführeinheit zu vermeiden, können die Steckanschlüsse des Rücklaufs und des Zulaufs parallel zueinander angeordnet sein.

Günstigerweise kann die Zuführeinheit aus mindestens zwei, zumindestens bereichsweise ineinander angeordneten Teilen bestehen. Dies ermöglicht einen einfachen Aufbau der Zuführeinheit.

Eine weitere Ausbildung sieht vor, dass der Rücklauf zumindest bereichsweise zwischen den mindestens zwei Teilen ausgebildet ist. Die Anordnung des Rücklaufs zwischen den zwei Teilen der Zuführeinheit ermöglicht eine kostengünstige Herstellung, da der Rücklauf durch die Ausbildung von Nuten und Wölbungen in den zwei Teilen gebildet werden kann. Dies ist insbesondere bei der Herstellung der Teile in einem Spritz- oder Gießverfahren von Vorteil, da einfache Spritz- oder Gießformen verwendet werden können.

Um eine komplizierte Konstruktion der Zuführeinheit mit einfachen Bauelementen zu verwirklichen, kann die Zuführeinheit aus mindestens drei, zumindest bereichsweise ineinander angeordneten Teilen bestehen und der Rücklauf zumindest bereichsweise zwischen einer Innenseite des oberen Teils und einer Oberseite eines mittleren Teils ausgebildet sein. Diese Konstruktion ermöglicht auch, komplizierte Führungen des Brühwassers in der Zuführeinheit mit einfachen Bauelementen zu realisieren.

Eine vorteilhafte Ausgestaltung sieht vor, dass die Zuführeinheit mindestens einen Einlasskanal zwischen dem Einlassventil und der Brühkammer aufweist, und der mindestens eine Einlasskanal zumindest bereichsweise zwischen einer Innenseite des mittleren Teils und einer Oberseite des unteren Teils ausgebildet ist. Durch diese Ausgestaltung lassen sich auch Einlasskanäle zur Brühkammer in einer einfachen Konstruktion durch zwei übereinander angeordnete Teile realisieren.

Bevorzugt kann die Zuführeinheit aus Kunststoff hergestellt sein. Durch den Einsatz von Kunststoff zur Herstellung der Zuführeinheit lassen sich die einzelnen Bauteile kostengünstig herstellen und einfach weiterverarbeiten.

Aus Vereinfachungsgründen kann die Brühkammer einen oberen Brühkammerteil und einen unteren Brühkammerteil aufweisen, wobei der untere Brühkammerteil eine Vertiefung zur Aufnahme von mindestens einem mit gemahlenem Kaffee gefüllten Filterkissen (Kaffeepad) aufweist, und wobei der obere Brühkammerteil relativ zum unteren Brühkammerteil bewegbar ausgeführt und von einer Öffnungsstellung, in der das Kaffeepad einsetz- oder entnehmbar ist, in eine Brühstellung überführbar ist. Dadurch wird eine einfache Konstruktion der gesamten Brühvorrichtung mit einer sicheren Bildung der Brühkammer ermöglicht, die eine hohe Betriebssicherheit aufweist.

Für eine direkte Anbindung des Zulaufs für das Brühwasser an die Brühkammer kann die Zuführeinheit als Bestandteil des oberen Brühkammerteils ausgebildet sein. Die Ausbildung der Zuführeinheit als Bestandteil des oberen Brühkammerteils reduziert die Wärmeverluste und ermöglicht eine Aufheizung des oberen Brühkammerteils.

Ein Ausführungsbeispiel sieht vor, dass der obere Brühkammerteil einen Ringdeckel und eine Druckplatte umfasst, wobei der Ringdeckel als oberer Teil der Zuführeinheit und die Druckplatte als unterer Teil der Zuführeinheit ausgeformt sind. Die Nutzung des Ringdeckels und der Druckplatte des oberen Brühkammerteils als Teile der Zuführeinheit verringert die Anzahl der für die Brühvorrichtung notwendigen Bauteile. Neben der Einsparung von Material reduziert sich auch der gesamte Montageaufwand.

Des Weiteren bezieht sich die vorliegende Erfindung auf eine Brühvorrichtung zur Zubereitung von Kaffee, insbesondere für eine Niederdruckkaffeemaschine, mit einer Brühkammer, die einen oberen Brühkammerteil und einen unteren Brühkammerteil aufweist und mindestens einem, in einer Vertiefung des unteren Brühkammerteils angeordneten und mit gemahlenem Kaffee gefüllten Filterkissen, wobei der obere Brühkammerteil und er untere Brühkammerteil relativ zueinander bewegbar ausgeführt und von einer Öffnungsstellung, in der das Kaffeepad einsetz- oder entnehmbar ist, in eine Brühstellung überführbar sind, und mit einer im oberen Brühkammerteil angeordneten Zuführeinheit für Brühwasser, die einen Zulauf für das Brühwasser und ein Einlassventil in die Brühkammer aufweist, wobei die Zuführeinheit einen absperrbaren Rücklauf für das Brühwasser aufweist. Der absperrbare Rücklauf ermöglicht ein Abführen von Luft, Kondensat und abgekühltem Brühwasser sowie einen Erwärmungsüberlauf aus der Zuführeinheit sowie den Zuleitungen zur Zuführeinheit. Dadurch wird verhindert, dass abgekühltes Wasser durch das Einlassventil in die Brühkammer gelangt. Auch zu Beginn des Brühvorgangs wird das Kaffeepad immer mit heißem Wasser beaufschlagt. Das Abführen des Erwärmungsüberlaufs über den Rücklauf ermöglicht weiter ein Warmhalten der Zuführeinheit sowie zumindestens bereichsweise des oberen Brühkammerteils.

Im Folgenden wird anhand der Zeichnungen eine Ausführungsform der erfindungsgemäßen Brühvorrichtung näher erläutert. Es zeigen:
Fig. 1 eine seitliche Schnittansicht der Brühvorrichtung in einer Brühstellung,
Fig. 2 eine perspektivische Seitenansicht des oberen Teils der Brühkammer,
Fig. 3 eine seitliche Schnittansicht einer weiteren Brühvorrichtung in einer Brühstellung,
Fig. 4 eine vergrößerte Schnittdarstellung des Ventilbereichs aus Fig. 3,
Fig. 5 eine Unteransicht des Ventilsitzes des Einlassventils aus Fig. 3, und
Fig. 6 eine Unteransicht (in Schnittdarstellung) der beiden Ventilsitze aus Fig. 3.

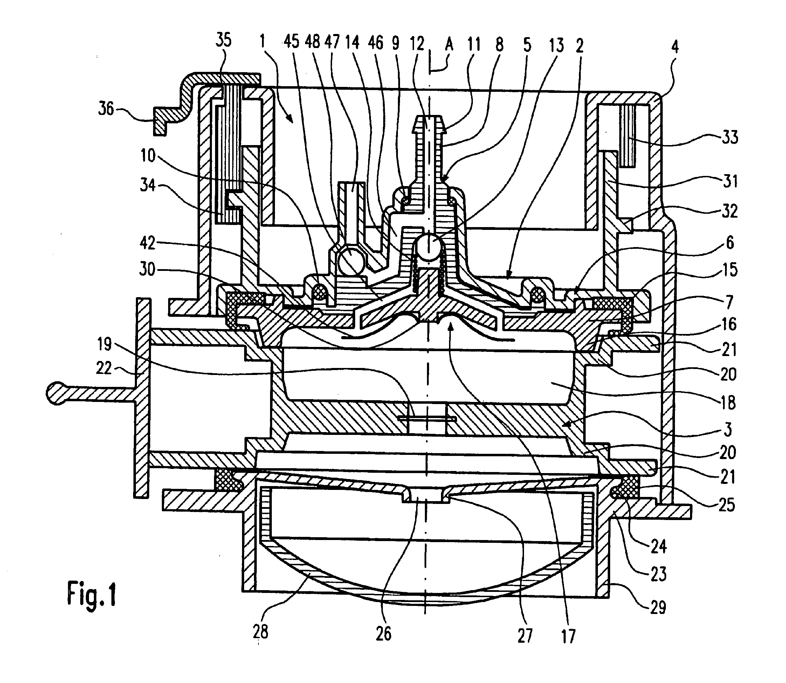

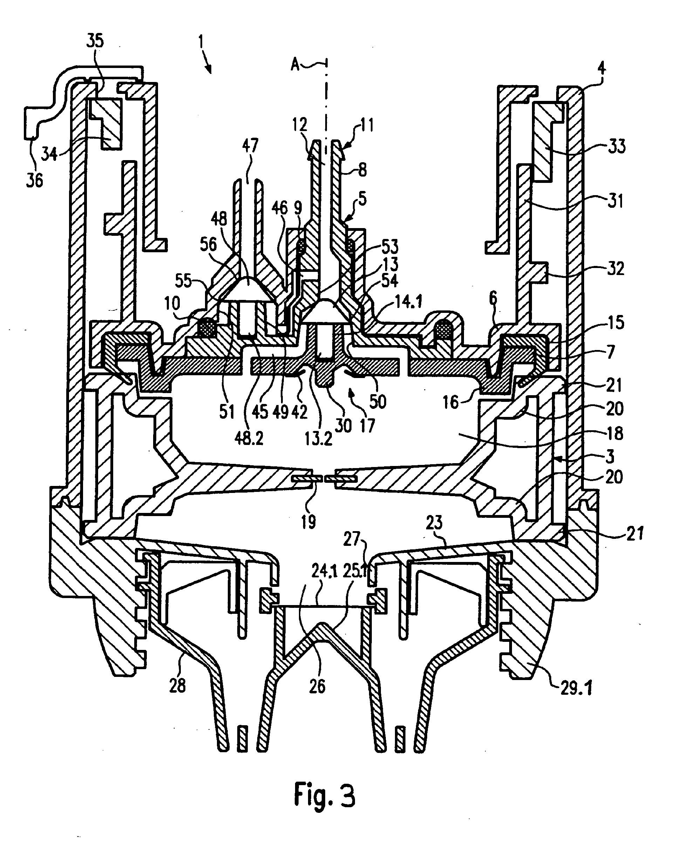

Die in Fig. 1 und 3 dargestellten Brühvorrichtungen sind jeweils ein Bestandteil einer Niederdruckkaffeemaschine, die in hier nicht näher beschriebener Weise bekannte Baueinheiten, wie Wasservorratsbehälter, Boilervorrichtung, Wasserpumpe und die für den Brüh- und Pumpvorgang erforderliche Elektrik umfasst. Hierzu gibt es im Stand der Technik ausreichend Beispiele, weshalb hier auf diesen verwiesen wird.

Fig. 1 zeigt den Schnitt durch eine erfindungsgemäße Brühvorrichtung 1 mit einem oberen Brühkammerteil 2 und einer Wechselkassette 3, die in einem Gehäuse 4 angeordnet sind. Der obere Brühkammerteil 2 besteht aus einem innenliegenden Ventilteil 5, einem Abdeckteil 6 und einer Druckplatte 7. Dabei ist das Abdeckteil 6 derart ausgeformt, dass es das innenliegende Ventilteil 5 in sich aufnimmt, wobei ausschließlich der Wasseranschluss 8 des Ventilteils 5 aus dem Abdeckteil 6 herausragt.

Zwischen dem Abdeckteil 6 und dem Ventilteil 5 sind zwei Dichtungsringe 9 und 10 angeordnet, wobei der Dichtungsring 9 am Austritt des Wasseranschlusses 8 aus dem Abdeckteil 6 platziert ist und der Dichtungsring 10, am Außenumfang des sich vom Wasseranschluss 8 seitlich erstreckenden Ventilteils 5, das Ventilteil 5 zum Abdeckteil 6 abdichtet. Am Wasseranschluss 8 ist an dem offenliegenden Ende einen umlaufenden Kragen 11 vorhanden, die den Anschluss und die Befestigung einer Brühwasserleitung erleichtert. Am unteren Ende des durch den Wasseranschluss 8 führenden Einlaufkanals 12 für das Brühwasser ist ein als Ventilkugel ausgebildetes Einlassventil 13 angeordnet, das sich hier mit einer Feder 14 gegen die Druckplatte 7 abstützt. Vom Einlaufkanal 12 zweigt kurz oberhalb des Einlassventils 13 ein Rücklauf 46 ab, der zunächst durch eine Bohrung im Ventilteil 5 verläuft und dann auf der Außenseite des Ventilsteils 5 sich zwischen dem Ventilteil 5 und dem Abdeckteil 6 bis zu einem Rücklaufanschluss 47 erstreckt, der im Abdeckteil 6 ausgebildet ist. Der zwischen dem Ventilteil 5 und dem Abdeckteil 6 verlaufende Abschnitt des Rücklaufs 46 ist durch die Dichtungsringe 9 und 10 zur Umgebung und zur Druckplatte 7 hin abgedichtet. Vor dem Rücklaufanschluss 47 ist eine Rücklaufventil 48, hier eine als Floatationskörper ausgebildete Glaskugel angeordnet, das den Rücklauf 46 zum Rücklaufanschluss 47 hin verschließen kann. Das Ventilteil 5 liegt mit seiner Unterseite an der Druckplatte 7 an, wobei die Feder 14 durch einen Vorsprung der Druckplatte 7 geführt wird. Zwischen dem Ventilteil 5 und der Druckplatte 7 erstrecken sich, ausgehend von dem Einlassventil 13 Zuführkanäle 45 für das Brühwasser, die sich zunächst seitlich erstrecken und an ihrem Ende durch die Druckplatte 7 hindurchgeführt sind. Das Abdeckteil 6 erstreckt sich vom seitlichen Dichtungsring 10 des Ventilteils 5 weiter nach außen und umfasst mit seiner Außenkante seitlich die Lippendichtung 15, die zwischen dem Abdeckteil 6 und der Druckplatte 7 platziert ist und in axialer Richtung nach unten teilweise über die Druckplatte 7 übersteht. Die Druckplatte 7 weist einen ringförmig umlaufenden, in axialer Richtung nach unten vorstehenden Steg 16 auf, der als einzigster Teil der Druckplatte 7 nach unten über die Lippendichtung 15 übersteht. In der Mitte der Druckplatte 7 ist um einen Zapfen 30 ein sich seitlich erstreckendes nach unten gerichtete Federelement 17 angeordnet.

Die Druckplatte 7 des oberen Brühkammerteils 2 bildet zusammen mit der Wechselkassette 3 eine Brühkammer 18. Zum Ausbilden der Brühkammer 18 weist die Wechselkassette 3 eine Vertiefung auf, in deren Mitte sich der Brühkammerauslass 19 befindet. Im Seitenbereich weist die Vertiefung einen ersten Absatz 20 auf, auf dem der Steg 16 der Druckplatte 7 aufliegt. An diesen Absatz 20 schließt sich in Form eines weiteren Absatzes ein Vorsprung 21 an, der mit der gegenüber dem Steg 16 zurückversetzten Lippendichtung 15 zusammenwirkt, um die Brühkammer 18 abzudichten. Der umlaufende Vorsprung 21 bildet gleichzeitig die Oberkante der Wechselkassette 3. Das Federelement 17 ragt mit seinen Federarmen 42 in die Brühkammer 18 hinein. Dabei bleiben die Federarme 42 hinter der Teilungsebene der Brühkammer 18 zwischen oberen Teil 2 und Wechselkassette 3 zurück, d.h. die Federarme 42 stehen nicht über den sich von der Druckplatte 7 nach unten erstreckenden Steg 16 über. Die Wechselkassette 3 weist an einer Seite einen Griff 22 auf, mit dem die Wechselkassette 3 in der Öffnungsstellung aus der Brühvorrichtung 1 herausgezogen werden kann. Dazu weist das Gehäuse 4 an der Seite des Griffes 22 eine entsprechende Öffnung auf. Die Wechselkassette 3 kann auch in einem gewendeten Zustand, d.h. die Ober- und Unterseite der Wechselkassette 3 sind vertauscht, in der Brühvorrichtung 1 eingesetzt werden. Dabei weist die in Fig. 1 als Unterseite der Wechselkassette 3 dargestellte Seite eine kleinere Vertiefung als die Oberseite auf, wodurch sich mit dieser Unterseite eine Brühkammer 18 mit einem verringerten Volumen bilden lässt. Um die Wechselfähigkeit zu ermöglichen, sind auch auf der Unterseite der Wechselkassette 3 im seitlichen Bereich der Vertiefung der Absatz 20 und der Vorsprung 21 ausgebildet.

Die Wechselkassette 3 stützt sich auf ihrer Unterseite mit dem äußeren Absatz 21 auf der Abstützplatte 23 ab, die seitlich über das Gehäuse 4 übersteht und mit diesem verbunden ist. die Abstützplatte 23 weist eine radial umlaufende Nut 24, in der ein Dichtungsring 25 angeordnet ist, der im geöffneten Zustand der Brühvorrichtung 1 über die Abstützplatte 23 vorsteht. Die Abstützplatte 23 weist mittig einen Ablauf 26 mit einem nach unten gezogen Spritzschutz 27 auf. Die Abstützplatte 23 weist zwischen dem Auflagebereich der Wechselkassette 3 und dem Ablauf 26 ein Gefälle auf, das den sicheren Ablauf des aus der Brühkammer 18 kommenden Kaffees in den Auslauf 28 ermöglicht.

Der in seinem Mittelbereich rund zulaufende Auslauf 28 ist in einer Vertiefung der Abstützplatte 23 angeordnet, die durch den sich in axialer Richtung erstreckenden Ringabschnitt 29 der Abstützplatte 23 gebildet wird. Der Auslauf 28 leitet den Kaffee zu mindestens einer, üblicherweise zwei, hier nicht gezeigten Auslauftüllen.

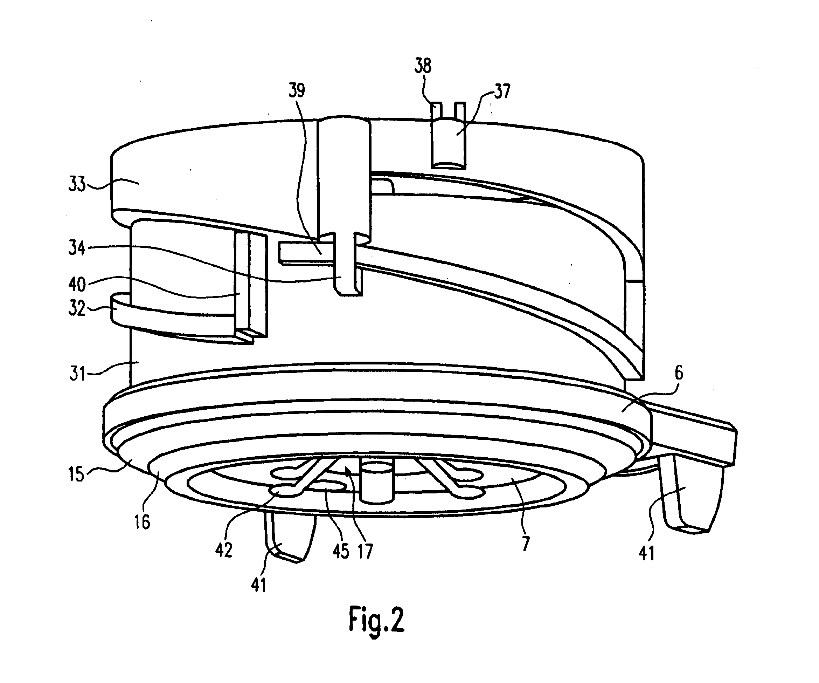

Um das obere Brühkammerteil 2 in axialer Richtung zu bewegen, ist das Abdeckteil 6 mit einem sich in axialer Richtung erstreckenden ringförmig ausgebildeten Aufdrückteil 31 verbunden. Am Außenumfang des Aufdrückteils 31 ist ein Führungssteg 32 ausgebildet, der sich wendelförmig um den Außenumfang des Aufdrückteils 31 erstreckt. Um den Außenumfang des Aufdrückteils 31 ist weiter das Betätigungsteil 33 platziert, das sich oberhalb des Führungsstegs 32 bis zu Oberkante des Gehäuses erstreckt. Das ebenfalls ringförmig ausgebildete Betätigungsteil 33 ist, wie in Fig. 2 deutlich erkennbar, rampenförmig ausgebildet und ist drehbar um das Aufdrückteil 31 angeordnet. Durch einen Öffnungsschlitz 35 an der Stirnseite des Gehäuses 4 ist das Betätigungsteil 33 mit einem Handgriff 36 verbunden. Dabei wird der Handgriff 36 an dem Gewindestutzen 37 verschraubt, der koaxial an der Oberkante des Betätigungsteils 33 angeordnet ist und mit einem Führungsabschnitt 38 in den Öffnungsschlitz hineinragt. Das Betätigungsteil 33 weist weiter einen Haken 34 auf, der den Führungssteg 32 umgreift. Der Führungssteg 32 weist einen waagerechten Stegteil 39 auf, der in der in Fig. 2 gezeigten Brühstellung mit dem Haken 34 des Betätigungsteils 33 in Verbindung steht, um die beim Brühen entstehenden Druckkräfte in vertikaler Richtung weiterzuleiten. Des Weiteren weist der Führungssteg 32 einen horizontalen Stegteil 40 auf, der im unteren Ende des wendelförmigen Führungsstegs 32 angeordnet ist und als Anschlag der Hubeinrichtung für die Öffnungsstellung der Brühvorrichtung 1 dient. Am Abdeckteil 6 sind zwei Arretierzapfen 41 angeordnet, die in axialer Richtung nach unten über den Steg 16 der Druckplatte 7 vorstehen und in entsprechende Öffnungen der Wechselkassette 3 eingreifen, um diese zu positionieren und ein Herausziehen in der Brühstellung zu verhindern.

Fig. 3 zeigt den Schnitt durch eine weitere erfindungsgemäße Brühvorrichtung, wobei hier nur die Unterschiede zur oben beschriebenen Ausführungsform erläutert werden. Am unteren Ende des durch den Wasseranschluss 8 führenden Einlaufkanals 12 für das Brühwasser ist hier ein im Folgenden noch näher zu beschreibendes Einlassventil 13 angeordnet, das sich mit Hilfe eines hülsenförmigen Vorsprungs 14.1 gegen die Druckplatte 7 abstützt. Vor dem Rücklaufanschluss ist ein noch näher zu beschreibendes Rücklaufventil 48 angeordnet, das den Rücklauf 46 zum Rücklaufanschluss 47 verschließen kann.

Unterhalb des Spritzschutzes 27 befindet sich in dieser Ausführungsform (Fig. 3) ein Sieb 24.1 mit einem darunter angeordneten Ablaufkegel 25.1, die für eine ausreichende Cremabildung sorgen. Der Auslauf 28 ist in einer Vertiefung der Abstützplatte 23 eingeschraubt, die durch den sich in axialer Richtung erstreckenden Ringabschnitt 29.1 der Abstützplatte 23 gebildet wird. Der Auslauf 28 leitet den Kaffee den zwei Auslauftüllen zu.

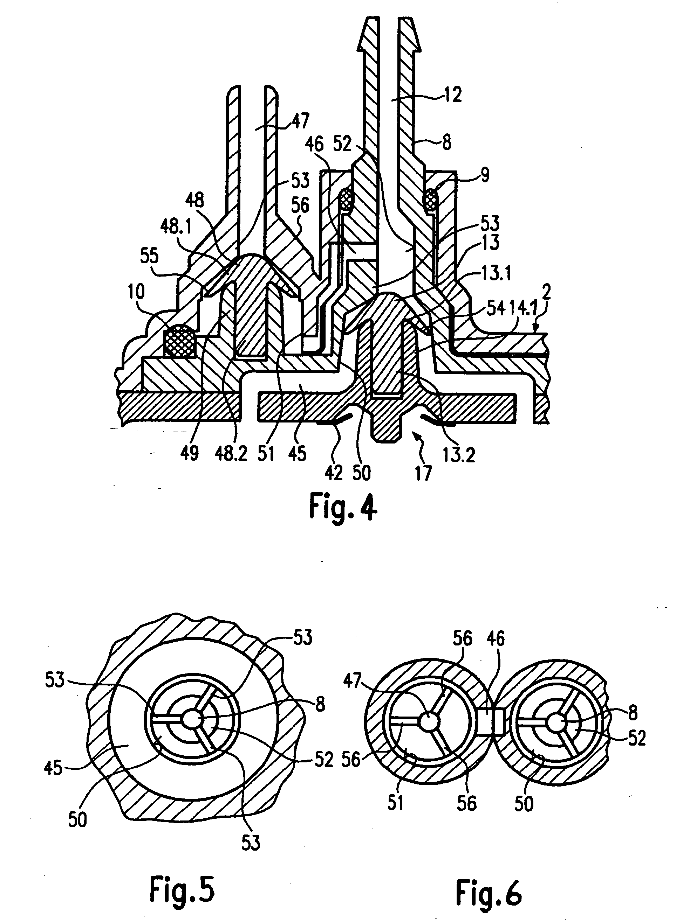

Insbesondere anhand der Fig. 4 ist zu erkennen, dass hier das Einlassventil 13 und das Auslassventil 48 baugleich ausgestaltet sind. Beide Ventile 13, 48 weisen einen flexiblen Ventilschirm 13.1, 48.1 mit einer konvexen Oberseite und einer konkaven Unterseite auf. Von der konkaven Unterseite erstreckt sich mittig jeweils ein zylindrischer Stößel 13.2, 48.2, der jeweils in dem zugehörigen hülsenförmigen Vorsprung 14.1 in der Druckplatte 7 bzw. 49 in dem Abdeckteil 6 eingesteckt ist. Die Unterseiten der Ventilschirme 13.1 und 48.1 stützen sich jeweils an der Oberkante bzw. Stirnfläche der hülsenförmigen Vorsprünge 14.1 bzw. 49 ab. Beide Ventile 18, 48 sind jeweils in einem (innen-)kegelmantelförmigen Ventilsitz 50, 51 angeordnet. Der Einlaufkanal 12 erweitert sich oberhalb des Einlassventils 13 in dem Abschnitt 52. Dieser Abschnitt 52 erweitert sich dann wiederum und erstreckt sich in den Ventilsitz 50. Ausgehend vom oberen Ende des Anschnittes 52 erstrecken sich drei um jeweils 120° zueinander versetzt angeordnete Rippen 53 (siehe auch Fig. 5 und 6). Die Rippen bilden jeweils zwischen sich Strömungskanäle, so dass Flüssigkeit weiterhin die Möglichkeit hat, von dem Abschnitt 52 zum Ventilsitz 50 zu fließen. Die Rippen 53 sind so ausgeformt, dass sie im mittigen Bereich auf die konvexe Oberseite des Einlassventils 13 aufdrücken, so dass das Einlassventil 13 zwischen den drei Rippen 53 und der Oberkante des hülsenförmigen Vorsprungs eingespannt ist. Die Dichtlippe 54 des Einlassventils 13 liegt mit einer vorgewählten Vorspannung an dem kegelmantelförmig ausgestalteten Ventilsitz 50 an. Die Vorspannung ist so gewählt, dass das Einlaufventil 13 bei einem Druck von weit unter 1 bar öffnet und die Zuführkanäle 45 freigibt.

Das Rücklaufventil 48, weist ebenfalls eine umlaufende Dichtlippe 55 auf, die allerdings nicht mit dem Ventilsitz 51 im unbelasteten Zustand in Berührung steht. Das Rücklaufventil 48 ist demnach in der gezeigten Stellung offen. Der Rücklaufanschluss 47 erweitert sich konisch zum Ventilsitz 51. Im Übergangsbereich befinden sich drei um jeweils 120° zueinander versetzte Rippen 56 (siehe auch Fig. 6), die jeweils zwischen sich einen Durchlasskanal freilassen. Die Rippen 56 sind auf die konvexe Oberseite des Rücklaufventils 48 aufgedrückt und spannen dieses zwischen sich und der Oberkante des hülsenförmigen Vorsprungs 49 ein. Das Rücklaufventil 48 benötigt zum Schließen einen Schließdruck, der etwa dem 5-fachen Öffnungsdruck des Einlassventils 13 entspricht.

In der Benutzung der erfindungsgemäßen Brühvorrichtung 1 kann in der Öffnungsstellung, in der das obere Brühkammerteil 2 durch das Betätigungsteil 33 und das Aufdrückteil 31 in eine obere Endstellung gefahren ist, wobei die obere Endstellung durch den Anschlag des vertikalen Stegteils 40 an den vertikalen Rampenbereich des Betätigungsteils definiert ist, die nur auf dem unteren Dichtring 25 aufliegende Wechselkassette 3 aus der Brühvorrichtung 1 entnommen werden, um die ausgewählte Vertiefung der Wechselkassette 3 mit einem bzw. gegebenenfalls zwei Filterkissen zu beladen. In der in Fig. 1 und 3 gezeigten Stellung wird die obere Vertiefung üblicherweise mit zwei Kaffeepads bzw. einem mit einer doppelten Menge an gemahlenem Kaffee gefüllten Kaffeepad, versehen. Die beladene Wechselkassette 3 wird wieder in die Brühvorrichtung 1 eingeschoben.

Nach Beendigung des Beladevorgangs wird die Brühvorrichtung 1 mit dem Handgriff 36 in die Brühstellung überführt. Dabei wird der Handgriff 36 um die vertikale Achse A geschwenkt und das mit ihm verbundene Betätigungsteil 33 um diese vertikale Achse A gedreht. Das Betätigungsteil 33 drückt mit seinen rampenförmig ausgebildeten Abschnitten auf den wendelförmigen Führungssteg 32, wobei sich der Kontakt zwischen dem Betätigungsteil 33 und dem Führungssteg 32 mit zunehmender Bewegung in Richtung der Brühstellung verringert. Durch den Druck auf den Führungssteg 32 wird das obere Brühkammerteil 2 in vertikaler Richtung auf die Wechselkassette 3 gedrückt. Bei dieser Schließbewegung berührt zunächst die Lippendichtung 15 den oberen Vorsprung 21. Als nächstes berührt der ringförmig umlaufende von der Druckplatte 7 axial vorstehende Steg 16 den oberen Absatz 20 der Wechselkassette 3, wobei sich die Lippendichtung 15 weiter an den oberen Vorsprung 21 andrückt. Bei einer Zunahme des axialen Drucks über den Steg 16 auf die Wechselkassette 3 wird der untere Vorsprung 21 auf die Abstützplatte 23 gedrückt, wobei der Dichtungsring 25 zusammengedrückt wird und damit seine Dichtwirkung zum unteren Vorsprung 21 erhöht. Durch den Eingriff des ringförmigen axial vorstehenden Stegs 16 in den oberen Absatz 20 wird während des Schließvorgangs die Lage der Wechselkassette 3 zum oberen Brühkammerteil 2 ausgerichtet. Während des Schließens der Brühkammer 18 drückt die Druckplatte 7 mit dem Federelement 17 das Kaffeepad gleichmäßig in die Vertiefung der Wechselkassette 3. Dadurch entsteht zwischen dem Kaffeepad und der Druckplatte 7 ein sich über einen großen Bereich der Druckplatte 7 radial erstreckender Hohlraum. In der Brühstellung ist die aus der Druckplatte 7 und der Vertiefung der Wechselkassette 3 gebildete Brühkammer 18 durch den auf den Absatz 20 drückenden Steg 16 und die auf den Vorsprung 21 drückende Lippendichtung 15 dicht gegenüber der Umgebung abgeschlossen.

Im Folgenden wird nunmehr die Wirkungs- und Funktionsweise der oben beschriebenen Brühvorrichtung 1 näher erläutert.

Bei der Inbetriebnahme einer Kaffeemaschine befinden sich sowohl im Einlaufkanal 12 für das Brühwasser als auch in der Zuleitung zum Ventilteil 5 Luft, Kondensat und/oder abgekühltes Brühwasser. Das Ventilteil 5 befindet sich dabei ebenso wie die umgebenden Teile des oberen Brühkammerteils 2 auf der Temperatur der Umgebung. Das Rücklaufventil 48 im Rücklauf 46 liegt auf dem Ventilteil 5 auf und gibt einen Durchlass zum Rücklaufanschluss 47 frei. Nach der Inbetriebnahme der Kaffeemaschine wird das Brühwasser in einer Boilervorrichtung erwärmt. Durch die mit steigender Temperatur zunehmende Ausdehnung des Brühwassers, wird erwärmtes Brühwasser durch die Anschlussleitung zum Ventilteil 5 und den Einlaufkanal 12 gedrückt. Das erwärmte Brühwasser ersetzt die bisher in diesen Leitungen stehende Luft, Kondensat und/oder abgekühltes Brühwasser, die durch den Rücklauf und den Rücklaufanschluss aus dem Ventilteil 5 herausgeführt werden. Bis zum Erreichen einer für den Brühvorgang ausreichenden Temperatur wird auch ein Teil des bereits erwärmten Brühwassers über den Rücklauf 46 und den Rücklaufanschluss 47 aus dem Ventilteil 5 herausgedrückt. Dadurch wird das Ventilteil 5 und die ihn umgebenden Elemente des Brühkammerteils 2 erwärmt. Dabei ist die Ausdehnung des Brühwassers in der Boilervorrichtung so gering und gleichmäßig, dass sich im Rücklauf 46 eine Strömungsgeschwindigkeit ausbildet, die nicht ausreicht, das Rücklaufventil 48 vom Ventilteil 5 abzuheben bzw. aufzudehnen und gegen ihren Ventilsitz 51 im Rücklaufanschluss 47 zu drücken. In diesem Betriebszustand bleibt daher der Rücklauf 46 offen und im Ventilteil 5 kann sich kein Druck aufbauen. Beim Erwärmen des Brühwassers in der Brühvorrichtung wird ständig ein kleiner Strom des erwärmten Brühwassers über das Ventilteil 5 geleitet, der beim Abkühlen des Brühwassers aus einem Wasservorratsbehälter in die Boilervorrichtung nachgeführt wird, wodurch sich auch in einem Stand-by-Modus das Ventilteil 5 nicht vollständig abkühlt und im Ventilteil 5 ständig erwärmtes Brühwasser zur Zubereitung von Kaffee bereitsteht.

In der in Fig. 1 und 3 dargestellten geschlossenen Brühstellung sind üblicherweise in der Brühkammer 18 zwei aufeinander liegende Filterpads angeordnet. Ein umlaufender Verriegelungsrand des oberen Filterpads liegt dabei auf der Oberseite des oberen Absatzes 20 auf und befindet sich demnach in der Brühstellung zwischen dem Absatz 20 und dem Steg 16. In dieser geschlossenen Brühstellung wird nach der Auslösung des Brühvorgangs von einer Pumpe heißes Brühwasser über die Anschlussleitung dem Ventilteil 5 zugeführt. Da das Einlassventil 13 zunächst geschlossen ist, strömt das in der Anschlussleitung enthaltene Brühwasser mit geringer Temperatur, zum Teil als Leckwasser, über den Rücklauf 46 und den Rücklaufanschluss 47 aus dem Ventilteil 5 ab.

Ein erhöhter Volumenstrom durch den Rücklauf 46 erzeugt im Bereich des Rücklaufventils 48, bzw. des Ventilsitzes eine hohe Strömungsgeschwindigkeit, die in Fig. 1 die Glaskugel vom Ventilteil 5 abhebt und mitreißt. Die Glaskugel wird gegen den Ventilsitz im Rücklaufanschluss 47 gedrückt und verschließt den Rücklaufanschluss 47. Als Folge steigt der Druck im Einlaufkanal 12 sowie im Rücklauf 46. Durch den Druckanstieg im Rücklauf 46 im Verhältnis zum Rücklaufanschluss 47 wird die Glaskugel 48 in ihrer Schließposition auf dem Ventilsitz gehalten. Als Folge des Druckanstiegs im Einlaufkanal 12 öffnet sich das Einlassventil, bevorzugt bei einem Druck, der den bevorzugten Betriebsdruck zwischen 1,5 bar bis 1,8 bar wesentlich unterschreitet, bevorzugt zwischen 0,3 bar und 0,8 bar, und der Brühvorgang kann beginnen. Durch den Druck des Brühwassers wird die Feder 14 durch die Ventilkugel des Einlassventils 13 zusammengedrückt, wobei die Ventilkugel sich von ihrem Ventilsitz löst und einen Wasserzulauf zur Brühkammer 18 durch die Zuführkanäle 45 und deren Austrittsöffnungen ermöglicht. Je nach Ausgestaltung des Brühkammerauslasses 19 kann die Pumpe in der gegenüber der Umgebung geschlossenen Brühkammer 18 bei einer in einer Niederdruckkaffeemaschine eingesetzten Brühvorrichtung 1 einen Druck zwischen 1,0 bar und 2,0 bar aufbauen. Das Brühwasser wird vom Ventilteil 5 durch mehrere Zuführkanäle 45 in den Hohlraum zwischen Federelement 17 und Druckplatte 7 eingespritzt. Dabei trifft das meiste Wasser zunächst auf einen der Federarme 42 und wird von dort versprüht durch den Hohlraum auf dem Kaffeepad flächig verteilt. Das Kaffeepad wird zunächst durch das Wasser befeuchtet und im weiteren Verlauf von dem Brühwasser durchströmt, das am Brühkammerauslass 19 aus der Brühkammer 18 als Kaffee austritt und über den Ablauf 26 und dem Auslauf 28 aus der oder den Auslauftüllen aus der Brühvorrichtung 1 abläuft. Die Abstützplatte 23 ist in dem Bereich unter der Brühkammer 18 zum Ablauf 26 hin geneigt, um einen sicheren und vollständigen Ablauf des Kaffees zu gewährleisten. Nach einem bestimmten, einstellbaren Zeitraum bzw. einer geförderten Wassermenge, wird die Pumpe wieder abgeschaltet und damit der Brühvorgang beendet.

Der erhöhte Volumenstrom durch den Rücklauf 46 erzeugt bei der in Fig. 3 gezeigten Brühvorrichtung durch den Strömungswiderstand im Bereich des Ventilsitzes 52 einen Druckaufbau im System, der die Dichtlippe des Ventilschirmes 13.1 nach unten drückt. Dieser Strömungsdruck bewirkt die Öffnung des Einlassventils 13, das definitionsgemäß bei einem ca. 5-fach niedrigeren Arbeitsdruck als das Rücklaufventil 48 öffnet. Nach Füllung der Brühkammer 18 arbeitet die Pumpe gegen den Widerstand der Düse 12 und es erfolgt eine weitere Druckerhöhung im System. Der Ventilschirm 48.1 des Rücklaufventils 48 wird gegen den Ventilsitz 52 im Rücklaufanschluss 47 gedrückt und verschließt den Rücklaufanschluss 47. Ein weiterer Druckanstieg sorgt dann für das vollständige Schließen des Rücklaufventils 48. Der Öffnungsdruck des Einlassventils 13 ist wesentlich kleiner als 1 bar. Je nach Ausgestaltung des Brühkammerauslasses 19 kann die Pumpe in der gegenüber der Umgebung geschlossenen Brühkammer 18 bei einer in einer Niederdruckkaffeemaschine eingesetzten Brühvorrichtung 1 einen Druck von max. 2,0 bar aufbauen. Bei dem üblichen Arbeitsdruck ist das Rücklaufventil 48 auch ausreichend geschlossen. Das in die Brühkammer 18 eintretende Wasser wird auf dem Kaffeepad flächig verteilt. Das Kaffeepad wird zunächst durch das Wasser befeuchtet und im weiteren Verlauf von dem Brühwasser durchströmt, das am Brühkammerauslass aus der Brühkammer 18 als Kaffee austritt und über den Ablauf 46 auf das Sieb 24.1 auftrifft. Dabei muss sichergestellt werden, dass der als dünner Sprühstrahl auf das Sieb 24.1 auftreffende Kaffee sofort über den Verteilerkegel 25.1 abgeführt wird. Durch diese Ausgestaltung bildet sich eine feine Crema aus. Nach einem bestimmten, einstellbaren Zeitraum bzw. einer geförderten Wassermenge, wird die Pumpe wieder abgeschaltet und damit der Brühvorgang beendet. Bei dem Druckabfall öffnet sich zuerst das Rücklaufventil 48, wodurch sich der Druck schlagartig abbaut und das Einlassventil 13 "schlagartig" geschlossen wird. Als Ventilwerkstoff wird hierbei bevorzugt ein Gummi- oder ein Silikonwerkstoff verwendet.

Nach dem Ende des Brühvorgangs kann die Brühkammer 18 durch ein Rückschwenken des Handgriffs 36 wieder geöffnet werden. Beim Rückschwenken des Handgriffs 36 wird das obere Brühkammerteil 2 in axialer Richtung nach oben bewegt, weil der Führungssteg 32 von dem Haken 34 umgriffen wird. Der Haken 34 überträgt die durch die Drehbewegung des Betätigungsteils 32 induzierte axiale Bewegung in Richtung der Öffnungsstellung über den Führungssteg 32 auf das Aufdrückteil 31 und damit auf das obere Brühkammerteil 2. Beim Öffnen der Brühkammer 18 drückt das Federelement 17 mit seinen Federarmen 42 auf das feuchte Kaffeepad und löst die nach dem Brühvorgang an der Druckplatte 7 anhaftenden Bereiche des Kaffeepads. So verbleibt das Kaffeepad beim Öffnen der Brühvorrichtung in der Vertiefung der Wechselkassette 3 und wird nicht zusammen mit dem oberen Teil der Brühkammer nach oben bewegt.

In der nicht dargestellten Öffnungsstellung sind die konisch ausgestalteten Arretierzapfen 41 aus den entsprechenden Öffnungen in der Wechselkassette 3 herausbewegt und geben diese frei. Die Druckplatte 7 ist ebenfalls so weit nach oben bewegt, dass sich der Steg 16 oberhalb der Öffnung für die Wechselkassette 3 im Gehäuse 4 befindet. In dieser Öffnungsstellung kann die Wechselkassette 3 zusammen mit dem gebrauchten, durch das Brühwasser befeuchteten Kaffeepad aus der Brühvorrichtung 1 am Griff 22 herausgezogen werden. Da das Federelement 17 beim Öffnen der Brühkammer 18 das Kaffeepad vom oberen Teil 2 gelöst hat, so dass das Kaffeepad sich in der Öffnungsstellung immer in der Vertiefung der Wechselkassette 3 befindet, kann die Wechselkassette 3 in der Öffnungsstellung immer ohne Probleme, d.h. ohne ein Verklemmen oder eine Beschädigung des Kaffeepads, aus der Brühvorrichtung 1 entnommen werden. Nach der Entnahme des verbrauchten Kaffeepads aus der Brühkammervertiefung der Wechselkassette 3 kann die Wechselkassette 3 für einen weiteren Brühvorgang erneut mit einem Kaffeepad versehen werden, oder ungefüllt in die Brühvorrichtung zurückgeschoben werden.

## Patentansprüche

1. Brühvorrichtung (1) zur Zubereitung von Kaffee, insbesondere für eine Niederdruckkaffeemaschine, mit einer in einem Brühkammergehäuse (2,3) ausgebildeten Brühkammer (18), und mit einer Zuführeinheit (5) für Brühwasser, die einen Zulauf für das Brühwasser und ein Einlassventil in die Brühkammer (18) aufweist,
**dadurch gekennzeichnet, dass** die Zuführeinheit (5) zur Erwärmung der Brühkammer in dem die Brühkammer umgebenden Brühkammergehäuse (2,3) angeordnet ist und einen absperrbaren Rücklauf umfasst.

2. Brühvorrichtung (1) nach Anspruch 1,
**dadurch gekennzeichnet, dass** der Rücklauf zum Absperren und Öffnen ein Rücklaufventil aufweist.

3. Brühvorrichtung (1) nach Anspruch 2,
**dadurch gekennzeichnet, dass** das Rücklaufventil einen im Rücklauf angeordneten Ventilkörper und einen mit dem Ventilkörper zusammenwirkenden Ventilsitz umfasst.

4. Brühvorrichtung (1) nach einem der Ansprüche 2 oder 3,
**dadurch gekennzeichnet, dass** das Rücklaufventil durch die Rücklaufströmung auslösbar ausgestaltet ist.

5. Brühvorrichtung (1) nach einem der Ansprüche 2 bis 4,
**dadurch gekennzeichnet, dass** das Rücklaufventil als Floatationskörper ausgebildet ist.

6. Brühvorrichtung (1) nach einem der Ansprüche 2 bis 4,
**dadurch gekennzeichnet, dass** das Rücklaufventil (48) einen flexiblen Ventilschirm (48.1) umfasst, dessen umlaufende Dichtlippe (55) mit einem zylindermantelförmigen oder kegelmantelförmigen Abschnitt eines zugeordneten Ventilsitzes in radialer Wirkbeziehung steht.

7. Brühvorrichtung (1) nach Anspruch 6,
**dadurch gekennzeichnet, dass** ein zentraler Bereich des flexiblen Ventilschirms (48.1) eingespannt ist.

8. Brühvorrichtung (1) nach Anspruch 6 oder 7,
**dadurch gekennzeichnet, dass** auf den zentralen Bereich einer Oberseite des Ventilschirms (48.1) Rippen (56) aufgedrückt sind, zwischen denen Strömungskanäle ausgestaltet sind.

9. Brühvorrichtung (1) nach Anspruch 8,
**dadurch gekennzeichnet, dass** das Rücklaufventil auf der konkaven Seite seines flexiblen Ventilschirms (48.1) einen zentralen Stößel (48.2) aufweist, der in einem hülsenförmigen Vorsprung (49) angeordnet ist, wobei der Ventilschirm (48.1) zwischen den Rippen (56) und dem oberen Rand des Vorsprungs (49) eingespannt ist.

10. Brühvorrichtung (1) einem der Ansprüche 6 bis 9,
**dadurch gekennzeichnet, dass** das Rücklaufventil (48) zum Steuern des Rücklaufs ausgebildet ist, die konkave Seite des Ventilschirms (48.1) der Strömungsrichtung entgegenweist und die umlaufende Dichtlippe (55) im drucklosen Zustand derart im Abstand zum Ventilsitz (51) angeordnet ist, dass das Rücklaufventil im Druckzustand bei einem Schließdruck von mindestens 3-mal bis max. 5-mal, bevorzugt 4,5-mal, größer als der Öffnungsdruck des Einlassventils (13) schließt.

11. Brühvorrichtung (1) nach einem der Ansprüche 1 bis 10,
**dadurch gekennzeichnet, dass** der Rücklauf mit einem Vorratsbehälter verbunden ist.

12. Brühvorrichtung (1) nach einem der Ansprüche 1 bis 11,
**dadurch gekennzeichnet, dass** der Rücklauf in geringem Abstand zum Einlassventil vom Zulauf für das Brühwasser abzweigt.

13. Brühvorrichtung (1) nach einem der Ansprüche 1 bis 12,
**dadurch gekennzeichnet, dass** der Rücklauf und der Zulauf Steckanschlüsse aufweisen, die bevorzugt zum Anschließen flexibler Leitungen ausgebildet sind.

14. Brühvorrichtung (1) nach Anspruch 13,
**dadurch gekennzeichnet, dass** die Steckanschlüsse des Rücklaufs und des Zulaufs parallel zueinander angeordnet sind.

15. Brühvorrichtung (1) nach einem der Ansprüche 1 bis 14,
**dadurch gekennzeichnet, dass** die Zuführeinheit aus mindestens zwei, zumindest bereichsweise ineinander angeordneten Teilen besteht.

16. Brühvorrichtung (1) nach Anspruch 15,
**dadurch gekennzeichnet, dass** der Rücklauf zumindest bereichsweise zwischen den mindestens zwei Teilen ausgebildet ist.

17. Brühvorrichtung (1) nach einem der Ansprüche 1 bis 14,
**dadurch gekennzeichnet, dass** die Zuführeinheit aus mindestens drei, zumindest bereichsweise ineinander angeordneten Teilen besteht und der Rücklauf zumindest bereichsweise zwischen einer Innenseite eines oberen Teils und einer Oberseite eines mittleren Teils ausgebildet ist.

18. Brühvorrichtung (1) nach Anspruch 17
**dadurch gekennzeichnet, dass** die Zuführeinheit mindestens einen Einlasskanal zwischen dem Einlassventil und der Brühkammer aufweist, und der mindestens eine Einlasskanal zumindest bereichsweise zwischen einer Innenseite des mittleren Teils und einer Oberseite eines unteren Teils ausgebildet ist.

19. Brühvorrichtung (1) nach einem der Ansprüche 1 bis 18
**dadurch gekennzeichnet, dass** die Zuführeinheit aus Kunststoff hergestellt ist.

20. Brühvorrichtung (1) nach einem der Ansprüche 1 bis 19
**dadurch gekennzeichnet, dass** die Brühkammer (18) einen oberen Brühkammerteil (2) und einen unteren Brühkammerteil (3) aufweist, wobei der untere Brühkammerteil (3) eine Vertiefung zur Aufnahme von mindestens einem mit gemahlenem Kaffee gefüllten Filterkissen (Kaffeepad) aufweist, und wobei der obere Brühkammerteil (2) relativ zum unteren Brühkammerteil (3) bewegbar ausgeführt und von einer Öffnungsstellung, in der das Kaffeepad einsetz- oder entnehmbar ist, in eine Brühstellung überführbar ist.

21. Brühvorrichtung (1) nach Anspruch 20,
**dadurch gekennzeichnet, dass** die Zuführeinheit als Bestandteil des oberen Brühkammerteils ausgebildet ist.

22. Brühvorrichtung (1) nach einem der Ansprüche 20 oder 21,
**dadurch gekennzeichnet, dass** der obere Brühkammerteil einen Ringdeckel und eine Druckplatte umfasst, wobei der Ringdeckel als oberer Teil der Zuführeinheit und die Druckplatte als unterer Teil der Zuführeinheit ausgeformt sind.

23. Niederdruckkaffeemaschine mit einer Brühvorrichtung (1) nach einem der Ansprüche 20 bis 22 mit mindestens einem, in der Vertiefung des unteren Brühkammerteils (3) der Brühkammer (18) angeordneten und mit gemahlenen Kaffee gefüllten Filterkissen (Kaffeepad).

## Claims

1. Brewing device (1) for preparing coffee, in particular for a low-pressure coffee machine, with a brewing chamber (18) disposed in a brewing chamber housing (2, 3), and with an intake unit (5) for brewing water which has an inlet for the brewing water and an inlet valve into the brewing chamber (18),
**characterised in that** the intake unit (5) for heating the brewing chamber is disposed in the brewing chamber housing (2, 3) surrounding the brewing chamber and has a return which can be shut off.

2. Brewing device (1) as claimed in claim 1,
**characterised in that** the return has a backflow valve for closing and opening purposes.

3. Brewing device (1) as claimed in claim 2,
**characterised in that** the backflow valve comprises a valve body disposed in the return and a valve seat co-operating with the valve body.

4. Brewing device (1) as claimed in one of claims 2 or 3,
**characterised in that** the backflow valve is designed so that it can be activated by the return flow.

5. Brewing device (1) as claimed in one of claims 2 to 4,
**characterised in that** the backflow valve is provided in the form of a float.

6. Brewing device (1) as claimed in one of claims 2 to 4,
**characterised in that** the backflow valve (48) has a flexible valve skirt (48.1), the circumferentially extending sealing lip (55) of which co-operates in a radial relationship with a cylindrical surface portion or conical surface portion of a co-operating valve seat.

7. Brewing device (1) as claimed in claim 6,
**characterised in that** a central region of the flexible valve skirt (48.1) is clamped.

8. Brewing device (1) as claimed in claim 6 or 7,
**characterised in that** ribs (56) are pressed onto the central region of a top face of the valve skirt (48.1), between which flow passages are formed.

9. Brewing device (1) as claimed in claim 8,
**characterised in that** the backflow valve has a central stem (48.2) on the concave face of its flexible valve skirt (48.1), which is disposed in a barrel-shaped projection (49), and the valve skirt (48.1) is clamped between the ribs (56) and the top edge of the projection (49).

10. Brewing device (1) as claimed in one of claims 6 to 9,
**characterised in that** the backflow valve (48) is designed to control the return, the concave face of the valve skirt (48.1) points in the direction opposite the flow direction and the circumferentially extending sealing lip (55) is disposed at a distance from the valve seat (51) in the non-pressurised state so that the backflow valve closes at a closing pressure at least 3 times to at most 5 times, preferably 4.5 times, greater than the opening pressure of the inlet valve (13) in the pressurised state.

11. Brewing deice (1) as claimed in one of claims 1 to 10,
**characterised in that** the return is connected to a reservoir.

12. Brewing device (1) as claimed in one of claims 1 to 11,
**characterised in that** the return branches off from the inlet for the brewing water at a slight distance from the inlet valve.

13. Brewing device (1) as claimed in one of claims 1 to 12,
**characterised in that** the return and the inlet have plug-in terminations which are preferably provided as a means of connecting flexible lines.

14. Brewing device (1) as claimed in claim 13,
**characterised in that** the plug-in terminations of the return and inlet are disposed parallel with one another.

15. Brewing device (1) as claimed in one of claims 1 to 14,
**characterised in that** the intake unit is made up of at least two parts, at least certain regions of which are disposed one inside the other.

16. Brewing device (1) as claimed in claim 15,
**characterised in that** at least some regions of the return are disposed between the at least two parts.

17. Brewing device (1) as claimed in one of claims 1 to 14,
**characterised in that** the intake unit is made up of at least three parts, at least certain regions of which are disposed one inside the other, and at least certain regions of the return are disposed between an internal face of a top part and a top face of a middle part.

18. Brewing device (1) as claimed in claim 17,
**characterised in that** the intake unit has at least one inlet passage between the inlet valve and the brewing chamber, and at least certain regions of the at least one inlet passage are disposed between an internal face of the middle part and a top face of a bottom part.

19. Brewing device (1) as claimed in one of claims 1 to 18,
**characterised in that** the intake unit is made from plastic.

20. Brewing device (1) as claimed in one of claims 1 to 19,
**characterised in that** the brewing chamber (18) has a top brewing chamber part (2) and a bottom brewing chamber part (3), and the bottom brewing chamber part (3) has a recess for accommodating at least one filter pad (coffee pad) filled with ground coffee, and the top brewing chamber part (2) is designed so that it is able to move relative to the bottom chamber part (3) and can be transferred from an open position in which the coffee pad can be inserted or removed to a brewing position.

21. Brewing device (1) as claimed in claim 20,
**characterised in that** the intake unit is an integral part of the top brewing chamber part.

22. Brewing device (1) as claimed in one of claims 20 or 21,
**characterised in that** the top brewing chamber part comprises an annular cover and a pressure plate and the annular cover constitutes the top part of the intake unit and the pressure plate constitutes the bottom part of the intake unit.

23. Low-pressure coffee machine with a brewing device (1) as claimed in one of claims 20 to 22, with at least one filter pad (coffee pad) disposed in the recess of the bottom brewing chamber part (3) of the brewing chamber (18) and filled with ground coffee.

## Revendications

1. Dispositif d'infusion (1) pour préparer du café, en particulier pour une machine à café basse pression, avec une chambre d'infusion (18) formée dans un boîtier de chambre d'infusion (2, 3), et une unité d'amenée (5) pour l'eau d'infusion, qui présente une arrivée pour l'eau d'infusion et une soupape d'admission dans ladite chambre d'infusion (18),
**caractérisé en ce que** l'unité d'amenée (5) destinée à chauffer la chambre d'infusion est disposée dans le boîtier (2, 3) qui entoure la chambre d'infusion, et comprend un dispositif de retour apte à être fermé.

2. Dispositif d'infusion (1) selon la revendication 1, **caractérisé en ce que** le dispositif de retour comporte, pour la fermeture et l'ouverture, une soupape de retour.

3. Dispositif d'infusion (1) selon la revendication 2, **caractérisé en ce que** la soupape de retour comprend un corps de soupape qui est disposé dans le dispositif de retour, et un siège de soupape qui coopère avec le corps de soupape.

4. Dispositif d'infusion (1) selon la revendication 2 ou 3, **caractérisé en ce que** la soupape de retour est conçue pour pouvoir être déclenchée par l'écoulement de retour.

5. Dispositif d'infusion (1) selon l'une des revendications 2 à 4, **caractérisé en ce que** la soupape de retour est conçue comme un corps flottant.

6. Dispositif d'infusion (1) selon l'une des revendications 2 à 4, **caractérisé en ce que** la soupape de retour (48) comprend une partie flexible en forme de parapluie (48.1) dont la lèvre d'étanchéité circulaire (55) est en relation fonctionnelle, radialement, avec une partie cylindrique ou conique d'un siège de soupape associé.

7. Dispositif d'infusion (1) selon la revendication 6, **caractérisé en ce qu'**une zone centrale de ladite partie flexible de soupape (48.1) est fixée par serrage.

8. Dispositif d'infusion (1) selon la revendication 6 ou 7, **caractérisé en ce que** des nervures (56) entre lesquelles sont formés des conduits d'écoulement sont pressées sur la zone centrale d'une face supérieure de la partie flexible de soupape (48.1).

9. Dispositif d'infusion (1) selon la revendication 8, **caractérisé en ce que** la soupape de retour présente sur la face concave de sa partie flexible (48.1) un piston central (48.2) qui est disposé dans une saillie en forme de manchon (49), ladite partie flexible (48.1) étant serrée entre les nervures (56) et le bord supérieur de la saillie (49).

10. Dispositif d'infusion (1) selon l'une des revendications 6 à 9, **caractérisé en ce que** la soupape de retour (48) est conçue pour commander le retour, la face concave de la partie flexible de soupape (48.1) est dirigée en sens inverse par rapport au sens d'écoulement, et la lèvre d'étanchéité circulaire (55) est disposée, en position sans pression, à une distance du siège de soupape (51) qui est telle que la soupape de retour, en position de pression, se ferme en présence d'une pression de fermeture égale à au moins 3 fois et au maximum à 5 fois, de préférence à 4,5 fois la pression d'ouverture de la soupape d'admission (13).

11. Dispositif d'infusion (1) selon l'une des revendications 1 à 10, **caractérisé en ce que** le dispositif de retour est relié à un réservoir.

12. Dispositif d'infusion (1) selon l'une des revendications 1 à 11, **caractérisé en ce que** le dispositif de retour bifurque à partir de l'arrivée prévue pour l'eau d'infusion, à une faible distance de la soupape d'admission.

13. Dispositif d'infusion (1) selon l'une des revendications 1 à 12, **caractérisé en ce que** le dispositif de retour et l'arrivée comportent des raccords qui sont conçus de préférence pour raccorder des conduits flexibles.

14. Dispositif d'infusion (1) selon la revendication 13, **caractérisé en ce que** les raccords du dispositif de retour et de l'arrivée sont parallèles.

15. Dispositif d'infusion (1) selon l'une des revendications 1 à 14, **caractérisé en ce que** l'unité d'amenée se compose d'au moins deux éléments qui sont disposés au moins par zones l'un dans l'autre.

16. Dispositif d'infusion (1) selon la revendication 15, **caractérisé en ce que** le dispositif de retour est formé au moins par zones entre les deux éléments, ou plus.

17. Dispositif d'infusion (1) selon l'une des revendications 1 à 14, **caractérisé en ce que** l'unité d'amenée se compose d'au moins trois éléments qui sont disposés au moins par zones les uns dans les autres, et le dispositif de retour est formé au moins par zones entre une face intérieure d'un élément supérieur et une face supérieure d'un élément central.

18. Dispositif d'infusion (1) selon la revendication 17, **caractérisé en ce que** l'unité d'amenée comporte au moins un conduit d'admission entre la soupape d'admission et la chambre d'infusion, et le ou les conduits d'admission sont formés au moins par zones entre une face intérieure de l'élément central et une face supérieure d'un élément inférieur.

19. Dispositif d'infusion (1) selon l'une des revendications 1 à 18, **caractérisé en ce que** l'unité d'amenée est fabriquée en matière plastique.

20. Dispositif d'infusion (1) selon l'une des revendications 1 à 19, **caractérisé en ce que** la chambre d'infusion (18) comporte une partie supérieure (2) et une partie inférieure (3), la partie de chambre inférieure (3) présentant un creux pour recevoir au moins un sachet-filtre (dosette souple) rempli de café moulu, tandis que la partie de chambre supérieure (2) est conçue pour être mobile par rapport à la partie de chambre inférieure (3) et est apte à passer d'une position ouverte dans laquelle on peut mettre ou enlever la dosette, à une position d'infusion.

21. Dispositif d'infusion (1) selon la revendication 20, **caractérisé en ce que** l'unité d'amenée est conçue comme une partie de la partie de chambre supérieure.

22. Dispositif d'infusion (1) selon la revendication 20 ou 21, **caractérisé en ce que** la partie de chambre supérieure comprend un couvercle annulaire et une plaque de pression, le couvercle annulaire étant conçu comme une partie supérieure de l'unité d'amenée, et la plaque de pression comme une partie inférieure de l'unité d'amenée.

23. Machine à café basse pression pourvue d'un dispositif d'infusion (1) selon l'une des revendications 20 à 22, avec au moins un sachet-filtre (dosette souple) qui est disposé dans le creux de la partie inférieure (3) de la chambre d'infusion (18) et qui est rempli de café moulu.
